# EUROPÄISCHE PATENTANMELDUNG

(11) **EP 1 432 090 A1**
(43) Veröffentlichungstag der Anmeldung: **23.06.2004**
(21) Anmeldenummer: 03090399.1
(22) Anmeldetag: 21.11.2003
(51) Int. Cl.: H02B 11/28

(54) **Einrichtung zur Erdung eines verschiebbaren Einschubs**

(30) Priorität: 16.12.2002 DE 10260402
(71) Anmelder: SIEMENS AKTIENGESELLSCHAFT, 80333 München (DE)
(72) Erfinder: Deylitz, Erhard, 13125 Berlin (DE); Marek, Kathrina, 16341 Zepernick (DE)

(57) **Zusammenfassung**

Die Erfindung liegt auf dem Gebiet der elektrischen Schaltanlagen (1) und bezieht sich auf eine Einrichtung (15) zur Herstellung einer unter Kontaktkraft gehaltenen stromleitenden Überbrückung zwischen einem verschiebbaren ersten Kontakt (13;53) und einem ortsfesten zweiten Kontakt (16) mit einem Kontaktelement (18), das einen ersten und einen zweiten Schenkel (22,23) aufweist, die endseitig stromleitend miteinander verbunden sind und im wesentlichen parallel zueinander verlaufen.

Um die Kontaktgabe zwischen dem Kontaktelement und den beiden Kontakten zu verbessern ist vorgesehen, dass beim Verschieben des ersten Kontaktes (13;53) die vom zweiten Kontakt (16) abgewandte Seite des freien Endes des ersten Schenkels (22) des Kontaktelementes (18) direkt oder mittels eines stromleitenden Zwischenstückes (50) an dem ersten Kontakt (13;53) anliegt und die vom ersten Kontakt (13;53) abgewandte Seite des freien Endes des zweiten Schekels (23) an dem zweiten Kontakt (16) schleift.

## Beschreibung

Die Erfindung liegt auf dem Gebiet der elektrischen Schaltanlagen und bezieht sich auf eine Einrichtung zur Herstellung einer unter Kontaktkraft gehaltenen stromleitenden Überbrückung zwischen einem verschiebbaren ersten Kontakt und einem ortsfesten zweiten Kontakt die ein Kontaktelement aufweist.

Die Erfindung bezieht sich weiterhin auf ein elektrisches Erdungsgerät zum Einschieben in einen Einschubrahmen, das mit einer derartigen Einrichtung zur Herstellung einer unter Kontaktkraft gehaltenen stromleitenden Überbrückung versehen ist.

Eine derartige Einrichtung zur Herstellung einer unter Kontaktkraft gehaltenen stromleitenden Überbrückung und ein derartiges elektrisches Erdungsgerät zum Einschieben in einen Einschubrahmen sind beispielsweise aus der Druckschrift DE 90 13 335 bekannt.

In der Praxis wurde eine Ausführungsform verwirklicht, bei der ein Kontaktelement vorgesehen ist, das einen ersten und einen zweiten Schenkel aufweist, die endseitig stromleitend miteinander verbunden sind und im wesentlichen parallel zueinander verlaufen (Kurzschließ- und Erdungseinsatz für eine Schaltanlage mit Niederspannungs-Leistungsschaltern 3WN1 der Firma Siemens AG, Deutschland). Bei dieser bekannten Ausführungsform übergreifen die beiden Schenkel des Kontaktelementes beim Einschieben des Kurzschließ- und Erdungseinsatzes in einen Einschubrahmen einer Schaltanlage eine Seitenwand des Einschubrahmens derart, dass die einander zugewandten Seiten der freien Enden der beiden Schenkel an der den zweiten Kontakt bildenden Seitenwand des Einschubrahmens schleifen. Die stromleitend miteinander verbundenen Enden dieser beiden Schenkel sind mittels einer Schraubverbindung mit einer den ersten Kontakt bildenden metallischen Seitenwand des Erdungs-Gerätes stromleitend verbunden und fixiert. Der gleichgerichtete Fluss des Stromes durch die beiden Schenkel führt dazu, dass die beiden Schenkel mit einer gewissen Kontaktkraft an der den zweiten Kontakt bildenden Seitenwand des Einschubrahmens schleifen.

Bei einer anderen bekannten gattungsgemäßen Einrichtung zur Herstellung einer unter Kontaktkraft gehaltenen stromleitenden Überbrückung zwischen einem verschiebbaren ersten Kontakt und einem ortsfesten zweiten Kontakt ist ein Kontaktelement vorgesehen, das aus einem sich innerhalb eines Einschubrahmens befindlichen ersten Teilbereich, einem sich außerhalb des Einschubrahmens befindlichen zweiten Teilbereich und einem die beiden Teilbereiche stromleitend verbindenden, eine Rückwand des Einschubrahmens durchgreifenden Kontaktband besteht. Hierbei liegt der zweite Teilbereich an einer den ortsfesten zweiten Kontakt bildenden Lasche am geerdeten Einschubrahmen an. Der erste Teilbereich weist einen U-förmigen Querschnitt und damit zwei stromleitend miteinander verbundene Schenkel auf (DE 200 20 401). - Bei dieser Einrichtung schleifen beim Verschieben des als Kontaktmessers ausgebildeten ersten Kontaktes die einander zugewandten Seiten der freien Enden der beiden Schenkel an dem Kontaktmesser. Hierbei führt der gleichgerichtete Fluss des Stromes durch die beiden Schenkel zu einer Verstärkung der Kontaktkraft, mit der die beiden Schenkel an den gegenüberliegenden Seiten des Kontaktmessers schleifen. Um hierbei eine gleichmäßige Kontaktkraftgabe an den gegenüberliegenden Seiten sicherzustellen ist der zweite Teilbereich des Kontaktelementes senkrecht zu diesen Seiten verschiebbar gehalten.

Ausgehend von einer Einrichtung gemäß dem Oberbegriff des Anspruches 1 (Kurzschließ- und Erdungseinsatz für eine Schaltanlage mit Niederspannungs-Leistungsschalter 3 WN 1 der Firma Siemens AG, Deutschland) liegt der Erfindung die Aufgabe zugrunde, die Kontaktgabe zwischen dem Kontaktelement und den beiden Kontakten zu verbessern.

Diese Aufgabe wird erfindungsgemäß dadurch gelöst, dass beim Verschieben des ersten Kontaktes die vom zweiten Kontakt abgewandte Seite des freien Endes des ersten Schenkels des Kontaktelementes direkt oder mittels eines stromleitenden Zwischenstückes an dem ersten Kontakt anliegt und die vom ersten Kontakt abgewandte Seite des freien Endes des zweiten Schenkels an dem zweiten Kontakt schleift. - Da bei einer derartigen Gestaltung das Kontaktelement der Strom von dem ersten Kontakt zu dem freien Ende des ersten Schenkels, durch das Kontaktelement hindurch und dann von dem freien Ende des zweiten Schenkels zu dem geerdeten zweiten Kontakt fließt, werden die beiden im wesentlichen parallel zueinander verlaufenden Schenkel von dem Strom in entgegengesetzten Richtungen durchflossen. Durch die magnetischen Felder der stromdurchflossenen Schenkel wird dabei auf die beiden Schenkel eine aufspreizende Kraftwirkung ausgeübt die dazu führt, dass zum einen der erste Schenkel mit verstärkter Kontaktkraft gegen den ersten Kontakt und zum anderen der zweite Schenkel mit verstärkter Kontaktkraft gegen den zweiten Kontakt gedrückt wird. Da hierbei das Kontaktelement nur an einer Seite des zweiten Kontaktes schleift, bleibt insbesondere die vom ersten Kontakt abgewandte Seite des zweiten Kontaktes und der sich daran anschließende Bauraum von der neuen Einrichtung unbeeinflusst.

Eine vorteilhafte Ausgestaltung der neuen Einrichtung sieht vor, dass wenigstens das freie Ende des zweiten Schenkels von Kontaktfingern gebildet ist, die in Richtung des zweiten Kontaktes konvex gekrümmt sind. - Hierdurch wird beispielsweisesichergestellt, dass beim Verschieben des ersten Kontaktes die Überbrückung zwischen dem Kontaktelement und dem zweiten Kontakt im wesentlichen im Bereich des Scheitels der Krümmung der Kontaktfinger und damit bei einer vorgegebenen Stellung des ersten Kontaktes gegenüber dem zweiten Kontakt hergestellt wird.

Eine weitere vorteilhafte Ausgestaltung sieht einen Kontakthalter vor, der das Kontaktelement derart hält, dass seine Schenkel zwischen den Kontakten schwenken können. - Hierdurch kann auf konstruktiv sehr einfache Weise sichergestellt werden, dass zwischen dem Kontaktelement und den beiden Kontakten Kontaktkräfte gleicher Größe wirken. Eine Beschädigung beispielsweise des Kontaktelementes, wie sie bei ungleicher Kontaktgabe auftreten würde, ist dadurch sicher ausgeschlossen und es können auch hohe Ströme ordnungsgemäß abgeleitet werden.

Die neue Einrichtung kann vorzugsweise in elektrischen Erdungsgeräten zum Einsatz kommen, die zum Einschieben in einen Einschubrahmen dienen, und die mit einem Gehäuse, mit oberen und unteren Anschlussschienen und mit einer Kurzschlussschiene zum Kurzschließen der oberen und/oder der unteren Anschlussschienen versehen sind. Dazu bildet die Kurzschlussschiene des Erdungsgerätes den ersten Kontakt, während der Einschubrahmen mit dem geerdeten zweiten Kontakt versehen ist.

Die Erfindung wird im Folgenden anhand eines in den Figuren 1 bis 6 dargestellten Ausführungsbeispieles näher erläutert. Dabei zeigen:
- Figur 1: eine schematische Darstellung einer Niederspannungs-Schaltanlage mit mehreren Kammern zur Aufnahme von Leistungsschaltern,
- Figur 2: eine Einrichtung zur Herstellung einer unter Kontaktkraft gehaltenen stromleitenden Überbrückung mit einem Kontaktelement, einem Kontakthalter und einem Distanzstück,
- Figur 3: einen geerdeten Einschubrahme,
- Figur 4: eine erste Ausführungsform eines in den Einschubrahmen gemäß der Figur 3 einschiebbaren elektrischen Erdungsgerätes in Explosionsdarstellung mit der neuen Einrichtung gemäß der Figur 2,
- Figur 5: einen Ausschnitt einer zweiten Ausführungsform des elektrischen Erdungsgerätes mit einem Fußteil und mit der neuen Einrichtung gemäß der Figur 2 und
- Figur 6: den Ausschnitt gemäß der Figur 5, jedoch ohne das Fußteil

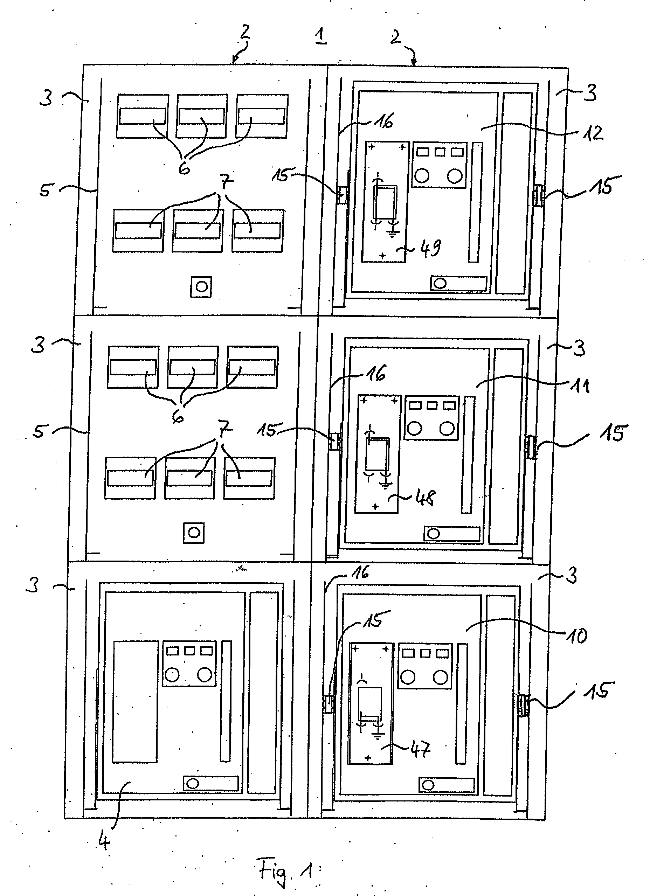

Die Schaltanlage 1 gemäß der Figur 1 besteht aus zwei nebeneinander angeordneten Feldern 2, die jeweils drei Kammern 3 zur Aufnahme eines Leistungsschalters besitzen. Eine der Kammern ist mit einem Leistungsschalter 4 bestückt. Aus zwei weiteren der Kammern sind die Leistungsschalter entfernt, so dass ein Einschubrahmen 5 sowie eine obere Reihe von ersten Trennkontakten 6 und eine untere Reihe von zweiten Trennkontakten 7 sichtbar sind. Mit den Trennkontakten 6 und 7 wirken an den Leistungsschaltern 4 rückseitig angeordnete Anschlussschienen zusammen.

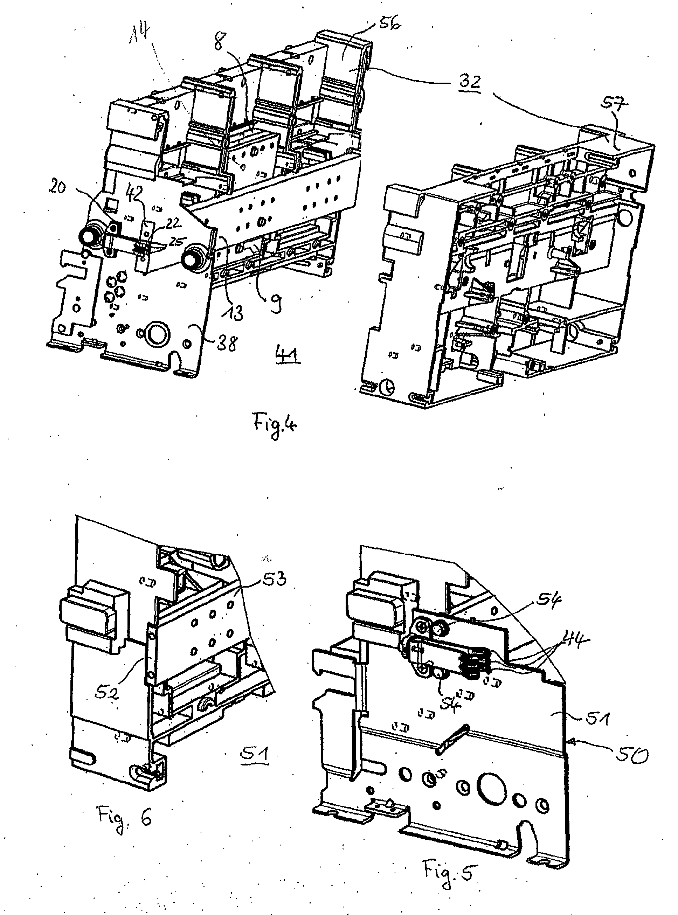

Bei der Durchführung beispielsweise von Montage- und Wartungsarbeiten an der Schaltanlage 1 ist es zum Personen- und Anlagenschutz bzw. für Messaufgaben erforderlich, anstelle der Leistungsschalter 4 elektrische Erdungsgeräte in den Einschubrahmen 5 einzuschieben. In der gezeigten Schaltanlage 1 sind drei mit oberen Anschlussschienen 8 und unteren Anschlussschienen 9 (vgl. Figur 4) versehene, verschieden konfigurierte Erdungsgeräte 10, 11, 12 gezeigt, die äußerlich dem Leistungsschaltern 4 ähneln. Die Art der Konfiguration ist jeweils auf einer im Frontbereich der Erdungsgeräte angebrachten Abdeckplatte 47, 48 bzw. 49 symbolisch angezeigt.

So sind gemäß der symbolischen Anzeige auf der Abdeckplatte 47 bei dem Erdungsgerät 10 die unteren Anschlussschienen 9 und gemäß der symbolischen Anzeige auf der Abdeckplatte 48 bei dem Erdungsgerät 11 die oberen Anschlussschienen 10 mittels einer Kurzschlussschiene 13 kurzgeschlossen. Bei dem Erdungsgerät 12 ist gemäß der symbolischen Anzeige auf der Abdeckplatte 49 jede der oberen Anschlussschienen 8 mittels einer schienenartigen Längsbrücke 14 mit der unter ihr angeordneten unteren Anschlussschiene 9 stromleitend verbunden und über eine Kurzschlussschiene 13 kurzgeschlossen (vgl. Figur 4). Durch Entfernen der Kurzschlussschiene 13 und der Einrichtung 15 kann das Erdungsgerät 12 in ein Kurzschließgerät (Kurzschließeinsatz) umgebaut werden. Alle drei Erdungsgeräte 10, 11, 12 weisen eine Einrichtung 15 zur Herstellung einer unter Kontaktkraft gehaltenen stromleitenden Überbrückung auf. Die stromleitende Überbrückung wird dabei zwischen der jeweiligen Kurzschlussschiene 13, die einen ersten Kontakt bildet, und einer der Seitenwände 16 des Einschubrahmens 5, die über ein Erdungskabel 17 geerdet ist und die einen zweiten Kontakt bildet, hergestellt.

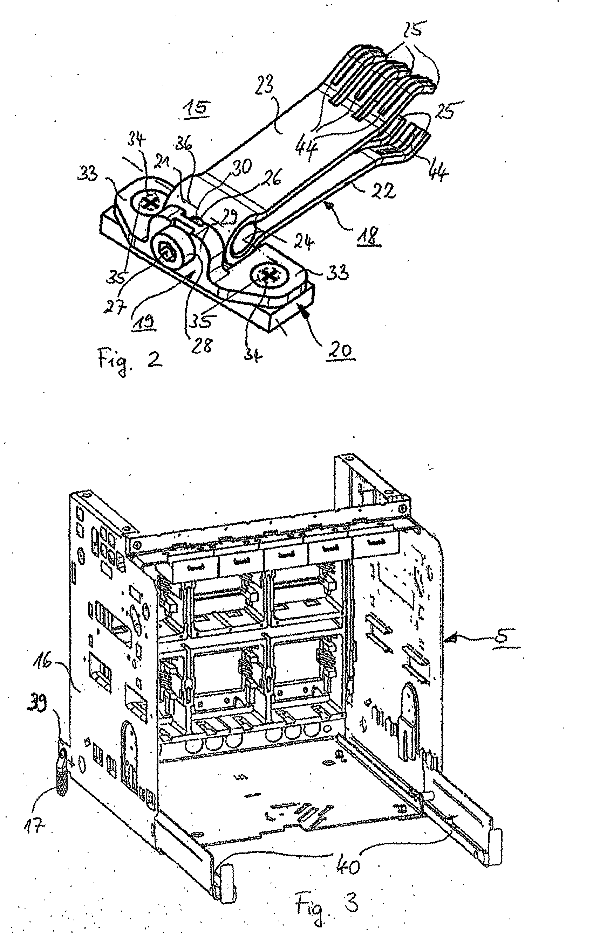

Gemäß der Figur 2 weist die Einrichtung 15 zur Herstellung der unter Kontaktkraft gehaltenen stromleitenden Überbrückung zwischen dem ersten und dem zweiten Kontakt ein Kontaktelement 18, einen aus einem elektrisch isolierendem Material bestehenden Kontakthalter 19 und ein aus Isoliermaterial bestehendes Distanzstück 20 auf.

Das Kontaktelement 18 weist einen im Wesentlichen U-förmigen Querschnitt auf. Hierbei ist die Basis 21, die die beiden Schenkel 22 und 23 verbindet, mehr als halbkreisförmig gebogen, so dass sie einem Bolzen 24, der als Schwenklager für das Kontaktelement 18 dient, in radialer Richtung verliersicher hält. Diese Basis ist gegenüber dem ersten Kontakt derart isoliert gelagert, dass eine direkte Überleitung eines abzuleitenden Stromes von dem ersten Kontakt zu der Basis sicher verhindert ist. Der Strom tritt daher von der den ersten Kontakt bildenden Kurzschlussschiene 13 in das freie Ende des ersten Schenkels 22 ein.

Zur Verbesserung der Kontaktgabe ist hierbei das freie Ende des ersten Schenkels 22 und auch das freie Ende des zweiten Schenkels 23 von jeweils drei Kontaktfingern 25 gebildet, die in Aufspreizrichtung des Kontaktelementes 18 konvex gekrümmt sind und in ihrer Längsrichtung linienförmige Ausprägungen aufweisen. Damit ist der Ort der Kontaktgabe sehr genau vorgegeben. Im Boden der Basis 21 ist eine langlochartige erste Durchgangsöffnung 26 vorgesehen, die von einem ersten Befestigungsmittel in Form einer ersten Schraube 27 durchgriffen ist. Die erste Schraube 27 dient zur Fixierung des Bolzens 24 an dem Kontakthalter 19. Hierzu ist der Schraubenkopf 28 an einem als Lasche 29 ausgebildeten ersten Abschnitt des Kontakthalters abgestützt. Der mit einem Außengewinde versehene Schaft der ersten Schraube 27 greift nach dem Durchtritt durch eine Bohrung der Lasche 29 des Kontakthalters und durch die Durchgangsöffnung 26 des Kontaktelementes in eine mit Innengewinde versehene Bohrung des Bolzens 24 ein. Zur Befestigung des Kontakthalters 19 an dem Gehäuse 32 des Erdungsgerätes dienen zwei als Flügel 33 ausgebildete, senkrecht zu dem ersten Abschnitt verlaufende zweite Abschnitte des Kontakthalters. Diese Flügel 33 weisen jeweils eine zweite Durchgangsöffnung 34 für den Durchtritt eines zweiten Befestigungsmittels in Form einer zweiten Schraube 35 auf. Das Distanzstück 20, das zwischen dem Gehäuse 32 und den Flügeln 33 des Kontakthalters eingelegt ist, trägt zur Isolierung der Basis des Kontaktelementes gegenüber dem ersten Kontakt bei. Es dient zur Festlegung des Abstandes der Schwenkachse 36 des Kontaktelementes von dem ersten und dem zweiten Kontakt. Die zweiten Schrauben 35 greifen nach dem Durchtritt durch die zweiten Durchgangsöffnungen 34 der Flügel 33, durch entsprechende Öffnungen des Distanzstückes 20 und durch zugeordnete Bohrungen eines metallischen Fußteiles 38 des Gehäuses 32 in eine mit Innengewinde versehene Befestigungsmutter ein.

Gemäß der Figur 3 ist das Erdungskabel 17 mit einer Lasche 39 der den zweiten Kontakt bildenden Seitenwand 16 des Einschubrahmens 5 stromleitend verbunden. Das Einsetzen und Einschieben der verschieden konfigurierten Erdungsgeräte 10, 11, und 12 erfolgt wie auch das Einsetzen und Einschieben des Leistungsschalters 4 in bekannter Weise über Führungsschienen 40 des Einschubrahmens 5 und über einen nicht weiter dargestellten Einschubmechanismus.

Bei einer ersten Ausführungsform 41 der verschieden konfigurierten Erdungsgeräte 8, 9 oder 10 liegen die Kontaktfinger 25 des ersten Schenkels des Kontaktelementes 18 direkt an der Stirnfläche 42 der den ersten Kontakt bildenden Kurzschlussschiene 13 an. Hierzu durchgreift zumindest ein Ende der Kurzschlussschiene 13 die Gehäuseschalen 56, 57 und das metallische Fußteil 38 des Gehäuses 32 derart, dass die Stirnfläche 42 in der Ebene der Außenseite des metallischen Fußteiles 38 liegt. Die linienförmigen Ausprägungen 44 der Kontaktfinger 25 des ersten Schenkels 22 liegen dabei - jeweils einen Kontaktpunkt bildend - an der Stirnfläche 42 der Kurzschlussschiene 13 an. Beim Einschieben des Erdungsgerätes treten die linienförmigen Ausprägungen 44 der Kontaktfinger 25 des zweiten Schenkels 23 bei einer genau vorgegebenen Einschubstellung des Erdungsgerätes in dem Einschubrahmen 5 in Kontakt mit der Seitenwand 16 des Einschubrahmens. Bei der Kontaktgabe schwenkt das Kontaktelement 18 derart um den Bolzen 24, dass die Kontaktfinger 25 an beiden stromleitend zu überbrückenden Kontakten, d.h. an der Stirnfläche 42 der Kurzschlussschiene 13 und an der Seitenwand 16 des Einschubrahmens 5 unter gleicher Kraft - sozusagen schwimmend, selbstausrichtend - anliegen.

Die Dicke des Distanzstückes 20 ist so gewählt, dass die Achse 45 des Bolzens und damit die Schwenkachse 36 des Kontaktelementes 18 im Wesentlichen mittig zwischen den Kontaktebenen der beiden Kontakte und damit mittig zwischen der Außenseite des metallischen Fußteiles 38 und der Innenseite der Seitenwand des Einschubrahmens 5 verläuft. Damit wird sichergestellt, dass die Kontaktgabe der beiden Schenkel des Kontaktelementes im wesentlichen im Scheitel der konvexen Krümmung der Kontaktfinger 25 und damit bei der vorbestimmten Einschubposition des Erdungsgerätes in dem Einschubrahmen erfolgt. Beim Auftreten eines abzuleitenden Stromes fließt der Strom von der Stirnfläche 42 zu dem freien Ende des ersten Schenkels 22, durch das Kontaktelement hindurch, von dem freien Ende des zweiten Schenkels 23 zu der Seitenwand 16 des Einschubrahmens und schließlich über das Erdungskabel 17 zur Erde. Dabei führt der entgegengerichtete Fluss des Stromes zu einer Magnetwirkung die eine aufspreizende Kraft auf die beiden Schenkeln 22, 23 ausübt. Hierdurch wird die Kontaktkraft, mit der die Kontaktfinger an den zugeordneten Kontakten anliegen, verstärkt.

Bei der zweiten Ausführungsform 51 der verschieden konfigurierten Erdungsgeräte 10, 11 und 12 liegen die Kontaktfinger 25 gemäß der Figur 5 mit ihren Ausprägungen 44 an der Außenseite des metallischen Fußteiles 51 an, während gemäß der Figur 6 die Stirnseite 52 der den ersten Kontakt bildenden Kurzschlussschiene 53 über dritte Befestigungsmittel in Form dritter Schrauben 54 an der Innenseite des Fußteiles 50 befestigt ist. Damit bildet das metallische Fußteil 50 ein Zwischenstück zwischen dem ersten Kontakt in Form der Kurzschlussschiene 53 und dem zweiten Kontakt in Form der Seitenwand 16 des Einschubrahmens 5. Auch bei dieser Ausführungsform 51 der Erdungsgeräte werden die beiden Schenkel 22, 23 des Kontaktelementes 18 in entgegengesetzten Richtungen durchflossen, so dass auch hier auf einfache Weise die Kontaktkraft, mit der jeder der beiden Schenkel an dem ihm zugeordneten Kontakt anliegt, verstärkt wird.

Das neue Erdungsgerät, dass im Wesentlichen aus den gleichen Serienteilen wie der Leistungsschalter 4 (insbesondere den gleichen Gehäuseschalen 56 und 57 und dem gleichen Einschubmechanismus) und der neuen Einrichtung 15 zur Herstellung einer unter Kontaktkraft gehaltenen stromleitenden Verbindung besteht, kann außerhalb des Einschubrahmens 5 und damit auf einfache weise montiert werden und erfordert insbesondere keine Modifizierung des Einschubrahmens.

## Patentansprüche

1. Einrichtung (15) zur Herstellung einer unter Kontaktkraft gehaltenen stromleitenden Überbrückung zwischen einem verschiebbaren ersten Kontakt (13; 53) und einem ortsfesten zweiten Kontakt (16)
mit einem Kontaktelement (18), das einen ersten und einen zweiten Schenkel (22, 23) aufweist, die endseitig stromleitend miteinander verbundenen sind und im wesentlichen parallel zueinander verlaufen,
**dadurch gekennzeichnet, dass**
beim Verschieben des ersten Kontaktes (13; 53) die vom zweiten Kontakt (16) abgewandte Seite des freien Endes des ersten Schenkels (22) des Kontaktelementes (18) direkt oder mittels eines stromleitenden Zwischenstückes (50) an dem ersten Kontakt (13; 53) anliegt und die vom ersten Kontakt (13; 53) abgewandte Seite des freien Endes des zweiten Schekels (23) an dem zweiten Kontakt (16) schleift.

2. Einrichtung nach Anspruch 1,
**dadurch gekennzeichnet, dass**
wenigstens das freie Ende des zweiten Schenkels (23) von Kontaktfingern (25) gebildet ist, die in Richtung des zweiten Kontaktes (16) konvex gekrümmt sind.

3. Einrichtung nach einem der Ansprüche 1 oder 2,
**dadurch gekennzeichnet, dass**
ein Kontakthalter (19) vorgesehen ist, der das Kontaktelement (18) derart hält, dass seine Schenkel (22, 23) zwischen den Kontakten (13, 16; 53, 16) schwenken können.

4. Elektrisches Erdungsgerät (41; 51) zum Einschieben in einen Einschubrahmen (5), wobei das Erdungsgerät mit einem ersten Kontakt und der Einschubrahmen mit einem geerdeten zweiten Kontakt (16) versehen sind,
mit einem Gehäuse (32),
mit oberen und unteren Anschlussschienen (8, 9),
mit einer Kurzschlussschiene (13; 53), die zum Kurzschließen der oberen und/oder der unteren Anschlussschienen (8, 9) dient und die den ersten Kontakt bildet, und mit einer Einrichtung (15) zur Herstellung einer unter Kontaktkraft gehaltenen stromleitenden Überbrückung zwischen dem ersten Kontakt und dem zweiten Kontakt,
**dadurch gekennzeichnet, dass**
die Einrichtung (15) nach einem der Ansprüche 1 bis 3 ausgebildet ist.

5. Elektrisches Erdungsgerät nach Anspruch 4,
**dadurch gekennzeichnet, dass**
das die vom zweiten Kontakt (16) abgewandte Seite des freien Endes des ersten Schenkels (22) direkt an einer das Gehäuse (32) durchgreifenden Stirnfläche (42) der Kurzschlussschiene (13) anliegt.

6. Elektrisches Erdungsgerät nach Anspruch 4,
**dadurch gekennzeichnet, dass**
das Gehäuse (32) einen stromleitenden Abschnitt aufweist, der das Zwischenstück (50) bildet.

7. Elektrisches Erdungsgerät nach einem der Ansprüche 4 bis 6
**dadurch gekennzeichnet, dass**
sich die freien Enden der beiden Schenkel (22, 23) entgegen der Einschubrichtung erstrecken.
